# EUROPEAN PATENT SPECIFICATION

(11) **EP 3 378 922 B1**
(45) Date of publication and mention of the grant of the patent: **18.08.2021**
(21) Application number: 16866679.0
(22) Date of filing: 18.11.2016
(51) Int. Cl.: C10L 10/02, C10L 9/10, C10L 5/44, C10L 5/14, C10L 5/32, C10L 9/08, C10L 11/04

(54) **TOXIC GAS-REDUCING, ENVIRONMENTALLY-FRIENDLY IGNITION COAL, AND METHOD OF MANUFACTURING SAME**
TOXISCHE GASE REDUZIERENDE, UMWELTFREUNDLICHE ZÜNDKOHLE SOWIE VERFAHREN ZU DEREN HERSTELLUNG
CHARBON D'ALLUMAGE RÉDUISANT LES GAZ TOXIQUES ET ÉCOLOGIQUE ET SON PROCÉDÉ DE FABRICATION

(30) Priority: 20.11.2015 KR 20150163419
(43) Date of publication of application: 26.09.2018
(73) Proprietor: The Industry & Academic Cooperation in Chungnam National University (IAC), Daejeon 34134 (KR)
(72) Inventor: KANG, Seog Goo, Seo-gu Daejeon 35346 (KR); LEE, Chang Goo, Gunpo-si Gyeonggi-do 15801 (KR); CHOI, Chul, Gimcheon-si Gyeongsangbuk-do 39584 (KR)
(74) Representative: Patentanwälte Vollmann Hemmer Lindfeld Partnerschaft mbB
(86) International application number: PCT/KR2016/013306
(87) International publication number: WO 2017/086727

(56) References cited:
- WO-A1-2014/014910
- FR-A- 695 798
- JP-A- 2006 265 279
- JP-A- 2007 332 274
- KR-A- 20070 035 013
- KR-A- 20110 121 485
- KR-B1- 101 355 013
- CRAVEN J M ET AL: "Hydrophobic coatings for moisture stable wood pellets", BIOMASS AND BIOENERGY, PERGAMON, AMSTERDAM, NL, vol. 80, 19 June 2015 (2015-06-19), pages 278-285, XP029255172, ISSN: 0961-9534, DOI: 10.1016/J.BIOMBIOE.2015.06.004

## Description

### 1. Field of the Invention

The present invention relates to toxic gas reducing environmentally friendly ignition coal and a method of manufacturing the same, and more particularly, to toxic gas reducing environmentally friendly ignition coal in which an amount of toxic gases harmful to the human body is significantly reduced even in ignition and combustion processes, and a method of manufacturing the same.

### 2. Description of the Related Art

FR 695 798 A describes a fire starter comprising chips, fibers, or strips of wood, lightly treated in a roaster. WO 2014/014910 A1 describes a high-energy water-resistant pellet of at least 75% torrefied wood and a remainder binder comprising from about 2% to about 20% by total weight of the pellet.

Generally, ignition coal is a type of agglomerated wood charcoal, which is called shaped molding coal or rapid ignition coal for ignition and firing, and includes all kinds of conventional sawdust molding coal, charcoal powder molding coal, and sawdust charcoal. In this case, the agglomerated wood charcoal is formed by molding raw materials such as particles, saw dusts, shavings, barks, and the like, of wood, bamboo or seeds, into a certain shape, to then be carbonized, and mixing the carbonized charcoal with an auxiliary additive such as a coking material (such as wheat flour or starch) and a burning material (such as barium nitrate or sodium nitrate) to then be molded (Announcement of Specification and Quality Standard of Wood Products; No. 2015-2; Annex 14-Molded Charcoal).

As a common feature of all kinds of the agglomerated wood charcoal, carbonization of raw materials is used. The agglomerated wood charcoal is produced through a phenomenon and a process in which organic substances are heated and pyrolyzed in an anaerobic atmosphere (or low-oxygen atmosphere) blocking air and oxygen.

The main materials of the above-mentioned agglomerated wood charcoal are standardized by using hardwood, softwood, bamboo and their seeds, sawdust, shavings and barks which are carbonized, but it is stipulated not to use other construction waste wood, household waste wood, disinfection treated wood, preservative treatment wood, and other hazardous material contaminated material.

However, in the case of actual sites, it has not been discriminated between the waste timber received through a normal distribution process and the contaminated waste timber which is not so, and the related institutions have not yet been able to crack down on the waste timber (National Forestry Academy Park et al., 2007).

At that time (2006), charcoal producers all over the country were randomly assigned and various types of charcoal products (hard charcoal, bamboo charcoal, etc.) produced by them were received, to then have conducted an experimental test of content (ppm) of lead and cadmium corresponding to heavy metal. As a result, the content of lead and cadmium in 4 of 13 kinds of charcoal products of Korean charcoal manufacturers was found to contain lead of 170, 77, 74, and 46, and cadmium of 5, 3, 1 and 1 ppm, According to the self-inspection comparison of the general food standard, the lead detection standard of seafood should satisfy 2.0 ppm or less, and cadmium detection standards of shellfish and rice should satisfy 2.0 ppm or less and 0.2 ppm or less, respectively. Considering the above points, it can be seen that the amount of heavy metals detected in the four charcoal products is extremely high.

In the same way as above, citing the result of detection of heavy metal content (lead and cadmium) by random selection of ignition charcoal and rapid ignition coal supplied by each company, it is found that lead content is 21 ppm at minimum to 830 ppm at maximum, and cadmium is 1 ppm at minimum to 13 ppm at maximum. It is found that the ignited carbon in the market has more company conditions and the higher content of heavy metals, than the above-mentioned general hard charcoal. These results show that even when hard charcoal containing no harmful substances is used, it is possible to detect a large amount of harmful substances when making the hard charcoal into powder, and adding barium nitrate or sodium nitrate, which is a combustion material, to the charcoal powder and it is possible to predict the fact that the amount of heavy metals generated is greatly due to when adding up a combustion material under the condition of using charcoal containing harmful substances.

In addition, according to a study published by Ham et al., in 2005, it has been revealed that, when wood waste such as furniture is incinerated in a low temperature region, the formalin-based adhesive component used for particle boards and Medium Density Fiberboard (MDF) is not completely decomposed, and mutated into dioxins and precursors to then be released, and according to a study published by Yoon et al., 2006, it has been pointed out that components such as chromium, copper, and arsenic, which are contained in the CCA preservative treatment wood, provide heavy metals that act as catalysts in the dioxin recomposition process, and thus it is highly likely that dioxin will increase in the combustion process.

It can be seen that it is common to use charcoal for roasting, except general wood, which is mainly used for roasting, before the agglomerated wood charcoal is developed. Also, there are many cases where hard charcoal or bamboo charcoal is used as charcoal because the yield of charcoal with respect to a volume standard (%) is high as a higher dense species of tree as a raw material of charcoal obtained through a long-term wood charcoal making process.

When the charcoal is used for roasting meat or fish, the surface of the meat or fish is heated faster than heating it with a propane gas or an electric heater. As a result, the structure of the food becomes hard and the glutamic acid, etc., which is a sweet component produced in the meat or fish, is not discharged to thus consequently have an effect of improving the taste of the food (Park et al., 2007). However, these charcoals also have a very low water content compared to general firewood, but because of the amorphous carbon material obtained by pyrolyzing the organic material at a high temperature, the ignition time is very long and it is very difficult to ignite without a specific kindling wood.

There are two main uses for the agglomerated wood charcoal. One is to help ignite other carbon materials (such as charcoal, etc.) as ignition coal, rapid ignition coal, etc., and the other is to be used as a fuel for roasting (such as sawdust coal, etc.). According to this purpose, the agglomerated wood charcoal made as the simple kindling wood is manufactured to contain a combustion material such as barium nitrate or sodium nitrate in order to improve ignition time and firepower. In the case of charcoal grilling, sawdust coal or hard charcoal that is produced without containing the combustion material should be used.

However, there are few cases where the agglomerated wood charcoal is classified and used appropriately for different purposes. In most cases, most of the roasting food culinary restaurants frequently utilize ignition coal and rapid ignition coal which is made of charcoal and a combustion material containing hazardous substances as a fuel for burning, and whose raw material history is unclear, and thus heavy metal emissions during the combustion process seriously threaten the health of people.

Meanwhile, unlike the original use, such ignition coal has been used for suicide frequently in recent years. According to a study published by Busan National University (Jun et al., 2014), the number of suicide cases using ignition coal such as rapid ignition coal has risen by about 17 times from 87 (0.7%) in 2007 to 1,254 (7.9%) in 2011.

Table 1 below shows the results of the toxic gas substance detection experiment conducted with the ignition coal available in the market in 2007, at the Sejong University atmospheric environment laboratory.

**[Table 1]**

| Pollutant | | | Sample ID[1] | | | | Incinerator Discharge allowed standard | Indoor air quality standard |
|---|---|---|---|---|---|---|---|---|
| Abbrevia tion | name | Concentration | Product of Company D | | Product of Company J | | | |
| | | | Early (D-1) | Lately (D-6) | Early (J-1) | Lately (J-6) | | |
| **CO*** | **carbon monoxide** | **ppm** | **35,778** | **47,778** | **38,200** | **24,200** | **300** | **10** |
| NO2* | Nitrogen dioxide | ppm | 72.44 | 24.67 | 180 | 16.9 | 150 | 0.05 |
| THC | Total hydrocarbons | ppm | 8,070 | 7,980 | 5,200 | 3,440 | 100 | - |
| TVOC | Total volatile organic matter | ppbc | 110,840 | 11,180 | 275,710 | 5,170 | - | 500 |
| PM10 | Fine dust | µg/m³ | 25,290 | | 14,840 | | 80,000 | 150 |

As shown in the above Table, the total amount of carbon monoxide emitted was found to exceed the allowable incineration emission standard or indoor air quality standards.

As a result, when the above cases are evaluated comprehensively, it is necessary to secure the performance of the agglomerated wood charcoal such as conventional ignition charcoal by applying a new material and manufacturing method thereof, as well as to develop a new technology for manufacturing ignition coal (i.e., the agglomerated wood charcoal) of a new concept capable of reducing the toxic gas, in order to prevent the problems of indiscreet use of harmful wood of unclear history and of a method of mixing chemical-based combustion materials such as barium nitrate and sodium nitrate, and the cases of abusing the agglomerated wood charcoal for suicide.

### SUMMARY OF THE INVENTION

Accordingly, the present invention has been made to solve the above-mentioned problems of the prior art, and to overcome the above-mentioned problems that, in the case of conventional ignition coal such as firball coal made of charcoal powder, the ignition time is long, and an igniting agent and a chemical adhesive are used for supplementing the demerit of the long igniting time, it is an object of the present invention to provide a new concept of toxic gas reducing type environmentally friendly ignition coal in which the generation of toxic gas is reduced by shortening the ignition time without using an igniting agent, and excluding the use of a formalin-based adhesive (such as a melamine resin adhesive) which can be used in molding, and a manufacturing method thereof.

In addition, it is an object of the present invention to provide a method of manufacturing environmentally friendly ignition coal, which is used in the existing agglomerated wood charcoal and which has the same performance as or superior characteristics to that of the existing ignition coal through the process conditions and excellent fuel conditions (such as a calorific value) that can be finally configured by applying a natural combustion material such as linseed oil that is drying oil and innocuous natural vegetable oil capable of replacing barium nitrate which is mainly mixed with the main carbon material and sodium nitrate which is applied as components of barium nitrate and potassium nitrate for the purpose of improving the ignition performance before the molding and injection process of the product, without using barium nitrate and sodium nitrate, to thus satisfy all the quality standards related to the above-mentioned quality characteristics and to completely detect no harmful heavy metals generated when conventional agglomerated wood charcoal is burned and remarkably lower the amount of generated carbon monoxide (ppm).

In addition, in order to avoid the use of charcoal materials with unclear history and harmful substances, it is an object of the present invention to provide a new concept of toxic gas reducing type environmentally friendly ignition coal by suggesting an institutional method of clearly understanding distribution processes of cut roadside trees, trees damaged from disease and harmful insects, twigs, roots, and forestation by-products, and using raw materials that do not contain harmful substances at all, to thus solve the fundamental problems of the existing agglomerated wood charcoal and contribute the forest resource environment of Korea through the technology that can lightly produce low value added woody materials, as well as to fundamentally prevent the suicide cases abused by conventional agglomerated wood charcoal through remarkably low carbon monoxide emission characteristics which is a strong advantage of this product.

A method of manufacturing toxic gas reducing environmentally friendly ignition coal according to the present invention comprises the steps of: chipping wood to a predetermined size or less by using an industrial chipping machine; heat treating the woody material obtained after the chipping step for a predetermined time at a processing temperature of 150 °C to 400 °C so that the carbon content of the woody material is 50 wt% or more and less than 90 wt%; pulverizing the woody material that has undergone the heat treating step into a pulverizer to then be pulverized into a wood powder; agitating the heat-treated wood powder with a natural adhesive, to then inject the agitated wood powder into a mold or a mold press; compression molding and drying the molded wood powder, thereby reducing toxic gas generation.

The adhesive comprises one adhesive of a natural adhesive group consisting of a starch adhesive, a rice flour adhesive, a gelatin adhesive, a blood plasma adhesive, an agar adhesive, and a tannin adhesive.

In the step of pulverizing the woody material into the wood powder, pulverization is performed in a size of 2.36 mm (8 mesh) to 0.425 mm (40 mesh).

In the chipping step, the water content condition of the wood comprises the condition of the living tree having a water content of 50 % to 80 %, an atmospheric dry wood having a water content of 11 % to 15 %, and an entire dry wood having a water content of 0 % to 3 %.

In the heat treatment step, the atmospheric temperature of a furnace in a carbonization apparatus is raised to 150 °C to 400 °C, and the inside of the furnace is subjected to heat treatment for 72 hours or less in an oxygen-free condition, in which, in the carbonization apparatus, the wood chips are supplied into a rotary drum rotating around the horizontal axis of the carbonization apparatus, and the rotary drum is heated by a heating unit for a rapid heat treatment, while rotating the rotary drum by a motor.

After having undergone a cooling process at the room temperature for 1 day to 2 days after the molding in the compression molding and drying step, 10 g to 30 g of drying oil is applied on one side of the molded and dried ignition coal and hot air drying is performed in a dryer at 40 °C to 105 °C.

The toxic gas reducing environmentally friendly ignition coal according to the present invention is produced by chipping wood to a certain size or less by using an industrial chipper and then heat-treating at a treatment temperature of 150 °C to 400 °C for a certain period of time so that the carbon content is 50 wt% or more and less than 90 wt%; pulverizing the woody material that has undergone the heat treating step into a pulverizer to then be pulverized into a wood powder; agitating the heat-treated wood powder with a natural adhesive, to then inject the agitated wood powder into a mold or a mold press; compression molding and drying the molded wood powder, thereby reducing toxic gas generation.

### ADVANTAGEOUS EFFECTS

In the case of the conventional rapid ignition coal made of charcoal powder, the ignition time is long and an ignition agent is used to supplement the long ignition time. However, in the case of the ignition coal according to the present invention, the toxic gas reducing environmentally friendly ignition coal is easy to be ignited in which toxic gas generation is significantly reduced.

### BRIEF DESCRIPTION OF THE DRAWINGS

FIG. 1 is a graph showing the results of measurement of carbon monoxide generation amounts of ignition coal according to the present invention and conventional rapid ignition coal.
FIG. 2 is a graph showing the results of measurement of total heat emission amounts of ignition coal according to the present invention and conventional rapid ignition coal.
FIG. 3 is a graph showing the results of measurement of ignition times required for ignition coal according to the present invention and conventional rapid ignition coal.
FIG. 4 shows graphs showing the results of measurement of the high calorific value, with or without a binder.
FIG. 5 is a graph showing the results of carbon monoxide emission amount detection experiment through a chamber experiment.
FIG. 6 is a graph showing a weight reduction rate with respect to a combustion time.
FIG. 7 is a graph of a calorific value converted using the weight reduction value.

### BEST MODE FOR CARRYING OUT THE INVENTION

A method of manufacturing environmentally friendly ignition coal according to an embodiment of the present invention will be described in detail with reference to the accompanying drawings.

Toxic gas reducing environmentally friendly ignition coal according to the present invention is manufactured by a method of manufacturing toxic gas reducing environmentally friendly ignition coal according to the present invention comprising the steps of: chipping wood to a predetermined size or less by using an industrial chipping machine; heat treating the woody material obtained after the chipping step for a predetermined time at a processing temperature of 150 °C to 400 °C so that the carbon content of the woody material is 50 wt% or more and less than 90 wt%; pulverizing the woody material that has undergone the heat treating step into a pulverizer to then be pulverized into a wood powder; agitating the heat-treated wood powder with a natural adhesive (such as a starch adhesive, a rice flour adhesive, a gelatin adhesive, a blood plasma adhesive, an agar glue, or a tannin glue), to then inject the agitated wood powder into a mold or a mold press; compression molding and drying the molded wood powder; and applying drying oil (such as linseed oil, perilla oil, flaxseed oil, poppy oil, walnut oil, safflower oil, sunflower oil, or mixed soluble oil) on one outer surface of the molded and dried ignition coal to then be dried. A method of manufacturing environmentally friendly ignition coal according to an embodiment of the present invention will be described in detail with reference to the accompanying drawings.

### 1. Lumbering and chipping processes

The woody material used in an embodiment of the present invention uses a harmless woody material in the forest or daily life environment in order to inhibit the indiscreet use of the charcoal material containing harmful substances, which has been a problem in manufacturing conventional agglomerated wood charcoal. The woody material used as the main material includes various kinds of mixed species of trees whose raw material history is clear, including general bamboos, pines, liga pines, larches, Korean white pines, radiata pines, eucalyptus, merantis, Chinese pines, birches, chestnuts, woodwort trees, cedars, oaks, red oaks, brown oaks, white oaks, oriental species of oaks, cherry trees, Yoshino cherry trees, acacia trees, weed trees, poplars, acacia from Vietnam, and keruing, in addition to low-value-added raw materials including trees damaged from disease and harmful insects such as pine trees suffering from victim of rehabilitation, and oak trees suffering from withering disease, cut roadside trees, twigs, lumber from thinning for a small span, and forestation by-products.

The above-mentioned wood is first logged, cut to a length of about 1 m, and then chipped and pulverized through an industrial chipper or the like to a size of 5 cm to 15 cm, preferably 10 cm, including barks. Here, the water content conditions of the wood include the water content conditions of the living tree having the water content of 50 % to 80 %, the atmospheric dry wood having the water content of 11 % to 15 %, and the entire dry wood having the water content of 0 % to 3 %.

### 2. Heat treatment process

The above chipped and pulverized wood chips are transferred to a drying and carbonization chamber and then the temperature of a furnace of batch wood hot drying and carbonization equipment or continuous wood drying and carbonization equipment is raised to a processing temperature of 150 °C to 400 °C, and the interior of the furnace is subjected to rapid high-temperature drying and heat treatment within 72 hours in an air-blocked state (or an oxygen-free condition).

Meanwhile, in some embodiments of the present invention, the wood chips are heat-treated by wood roasting in order to prevent the problem that the raw woody materials are generally carbonized because the raw materials are put in the state of reaching the temperature of 150 °C

to 400 °C and rapidly heat-treated. In some embodiments of the present invention, the wood chips are supplied into a rotary drum rotating around a horizontal axis instead of a conventional carbonization furnace, and the rotary drum is heated by a heating unit including a gas burner while the rotary drum is rotated by a motor, to thereby heat treating the woody chips successively and rapidly. Therefore, in order to supplement the shortcomings such a long carbonization time and difficult continuous production in the conventional carbonization furnace, the wood chips can be heat treated rapidly at a low cost by continuously heat treating the wood chips according to some embodiments of the present invention, as described above.

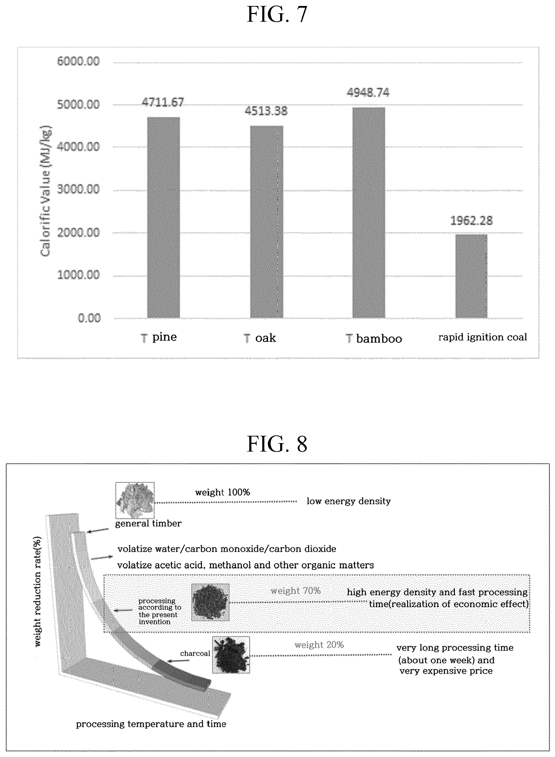

In this heat treatment step, the heat treatment step means the state in which water, carbon monoxide, carbon dioxide, and other volatile substances including acetic acid, and methanol has been removed from the wood and before the wood has been produced into charcoal, as the heat treatment temperature and the heat treatment time are increased as shown in FIG. 8 during the wood carbonization step, and it becomes. That is, when the wood treatment range according to the embodiment of the present invention is divided with the carbon content, the wood is heat treated to have the carbon content of 50 wt% to 90 wt% that is an intermediate carbon content range between the carbon content of the charcoal of 90 wt% to 100 wt% and the carbon content of the living tree state of 40 wt% to 50 wt%, preferably is heat treated to have the carbon content of 55 wt% to 80 wt%. Therefore, the incidence of incombustible gas is very low in comparison with a general wood even in the combustion process at the time of producing ignition coal, and the characteristic of high heat calorific value is exerted due to the higher carbon content than a general untreated wood.

The raw materials to be introduced in some embodiments of the present invention are heat treated for 72 hours or less. According to material conditions such as a size, density, shape, weight, and area, and water content conditions such as 50 % to 80 % of the living tree, 11 % to 15 % of the atmospheric dry wood, and 0 % to 3 % of the entire dry tree. In this case, the treatment time of 72 hours or less varies depending on the size of the initial raw material to be heat treated (such as the log, wood, plate, wood chip, wood powder, etc.), the inner diameter of a furnace of the semi-carbonization apparatus, and the quantity of the raw materials to be semi-carbonized. The wood subjected to the above heat treatment is also taken out immediately after the treatment or cooled to the room temperature.

### 3. Pulverizing process

The heat-treated wood chips taken out or collected through the above heat treatment process undergo a process of pulverizing the wood chips into the wood chips or wood powder of particle size of 8 mesh to 40 mesh in size, which is the size of the particles for general particle boards, through an industrial chipper or a pulverizer dedicated for wood chips.

### 4. Molding and pressing processes

The wood powder obtained by the above pulverizing process is added with a natural adhesive such as a binder and mixed with the natural adhesive at a mixing ratio of solids of 12 % to 15 % based on the total dry fuel as a ratio of the natural adhesive added, to then undergo processes of stirring, molding and injecting the mixed result. The adhesive to be added during molding serves as a binder to form the heat-treated wood powder into a product. The binder (i.e., the adhesive) used in the present invention may be a starch adhesive, a rice flour adhesive, a soybean adhesive, a gelatin adhesive, a blood plasma adhesive, a tannin adhesive, an agar adhesive, and the like, as an environmentally friendly adhesive.

Among them, the blood plasma adhesive is manufactured by using slaughter blood generated when slaughtering livestock such as cattle or pig, and separating and concentrating blood plasma as a supernatant liquid by centrifuging the slaughter blood with a centrifugal separator.

The tannin adhesive is an adhesive made by extracting the tannin components contained in the bark, and the agar adhesive is an adhesive extracted by hydrolysis of algae such as agars. The adhesive is used by mixing water or distilled water at various mixing ratios for viscosity control. As described above, in some embodiments of the present invention, by using the above-mentioned natural adhesive as a binder for ignition coals, it is possible to prevent the generation of harmful gas due to the use of a chemical adhesive such as urea resin, melamine resin, etc., as a conventional binder used at the time of manufacturing the conventional agglomerated wood charcoal.

Meanwhile, the mixing ratio of the wood powder and the adhesive is adjusted according to species, density, particle size, water content of the wood powder raw material, and viscosity of the adhesive, deposition time, and thermoplastic and thermosetting properties. The method used for the ignition coal to be manufactured in the embodiment of the present invention is to thoroughly dry all of the main raw materials and then quantify the solid content of the adhesive corresponding to 12 % to 15 % of the weight of the wood powder so as to be introduced into the dried main raw materials. The amount of distilled water and water added to make the quantified adhesive solid in liquid form is added in an amount of 1.5 to 2 times as much as the weight of the solid content of the adhesive, and stirred in a constant-temperature water bath through a boiling process at 40 °C to 60 °C until the viscosity became constant. After the stirring, the liquid-phase adhesive is mixed with the completely dried raw material and stirred for a certain period of time, and is subjected to a deposition time at the room temperature for 5 minutes to 7 minutes before undergoing an injection process in a dedicated mold press. Then, the present mixed raw materials are vertically put into a molding machine of a mold press, or are injected through a stirring and mixing arrangement process, followed by injection molding. A compression process of 5 minutes to 10 minutes is undergone as the pressing time, and thus a product of a round agglomerated wood charcoal shape having a large number of air holes can be recollected. However, according to the examples given above, the amount of the solid content of the adhesive, the deposition time, the press time, and the press temperature can be set differently depending on the species, density, particle size and water content of the raw material. This should be done as long as it does not deviate from a large range. In addition, the product specification is not

greatly limited in the compression process, and the diameter and height of the product and the number of holes can be appropriately adjustably shaped at a weight of 175 g or more.

### 5. Cooling and drying processes

The molded and formed products of the agglomerated wood charcoal obtained through the above molding and pressing processes are cured at the room temperature for 1 day to 2 days and then blow-dried or dried with hot air in a dryer at 40 °C to 105 °C, again.

### 6. Drying oil application process

Drying oil such as linseed oil, perilla oil, flaxseed oil, poppy oil, walnut oil, safflower oil, sunflower oil, mixed solvent oil, etc., is coated on one side of the product of the round agglomerated wood charcoal shape. Here, the coating amount is applied at a level of 10 g to 30 g, and then dried through a hot air drying process at 40 °C to 105 °C to thus obtain a final product.

Meanwhile, in the method of producing ignition coal according to the embodiment of the present invention, the wood chips are heat-treated and then processed into wood powder. In another embodiment, the wood may be heat-treated in a state of a wood size of about 1 m or so before being processed into wood chips, and processed and produced into the wood powder.

### [Test Example]

Combustion experiments were carried out to compare the carbon monoxide concentration of the environmentally friendly ignition coal according to the embodiment of the present invention with that of the conventional rapid ignition coal.
1) The environmentally friendly ignition coal according to the embodiment of the present invention used in the experiments was prepared by selecting the heat-treated wood powder (mesh #12 to #20 and carbon content 58 wt% to 63 wt%) of oak trees obtained by wood roasting treatment, and was used as the raw material of 300 g with respect to the entire dry tree. In addition, gelatin solids extracted from pork leather were used as the natural adhesive. 100 g of distilled water was mixed with 50 g of gelatin solids, which corresponds to 15% of 300 g of the heat-treated wood chips, and stirred to then undergo a stirring process again together with the heat-treated wood powder. After that, the heat-treated wood powder mixed with gelatin solids was put into a molding machine of a mold press and then subjected to a compression process for 10 minutes. A circular product manufactured through the molding machine of the mold press had a diameter of 13.5 cm and a total of 13 air holes penetrating the upper and lower parts of the circular product. The total volume of the circular product was about 440 cm³. Then, after curing at room temperature for 1 or 2 days, 20 g of linseed oil being a drying oil was applied to one side of the circular product. Then, the circular product was artificially dried in an oven dryer at 50 °C for 2 days to thus be finally produced into ignition coal.
2) Generally, in the case of the conventional ignition coal, heavy metals are detected because of the abuse of waste wood of unclear history and the use of barium nitrate or sodium nitrate as a combustion material. In the case of the above test specimens, the waste wood of unclear history and the barium nitrate or sodium nitrate have been never used, and thus it is assumed that there is no possibility of detection of heavy metals. In order to investigate the content of carbon monoxide, which is a noncombustible substance generated by oxygen deficiency during the combustion process, the cone-calorimeter experiments were conducted through a testing facility (located in Seoul, Korea) for four specimens including the products that have been classified and produced into three conditions such as pine tree, oak tree, and bamboo according to the present invention and the conventional ignition coal.

Here, the composition ratio of the conventional ignition coal was prepared by injecting and molding a mixture of 280 g of charcoal powder and 26 g of solid content of wheat flour, and applying 25 g of barium nitrate and 7 g of niter (i.e., sodium nitrate, etc.) onto the outer surface of the injection-molded resultant.

In addition, in the case of a cone calorimeter at the time, the temperature inside a cone type furnace was about 600 °C when 50 kW of power was used. The carbon monoxide generation amount, the total heat emission amount, the ignition time, etc., were measured through 5 minutes of an experiment after having ignited a specimen in this environment. The results are as follows.

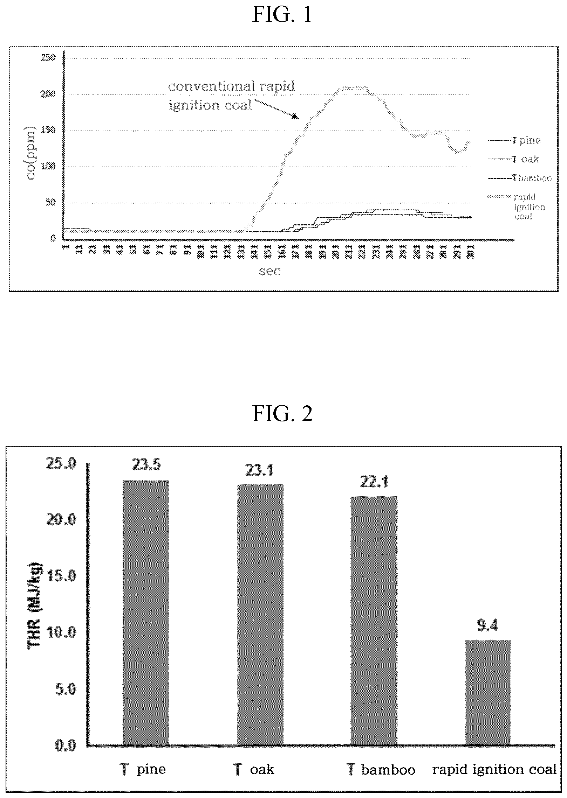

First, FIG. 1 is a graph showing the results of measurement of a carbon monoxide generation amount. As shown in FIG. 1, the amounts of carbon monoxide emitted by the three kinds of the ignition coal made of certain trees such as pine, oak, and bamboo according to the present invention were significantly lower than that of the conventional rapid ignition coal. This is because the ignition performance of the ignition coal according to the present invention is superior to that of the conventional rapid ignition coal and relatively few of the non-combustion materials that are the main cause of carbon monoxide generation occur.

FIG. 2 is a graph showing the results of a comparative analysis of the total heat release amounts obtained through the cone calorimeter experiment. The three kinds of the ignition coil according to the present invention were found to have a higher heat release amount than the conventional rapid ignition coal. Therefore, it could be confirmed that the thermal efficiency of the ignition coal according to the present invention is higher than that of the conventional rapid ignition coal which is used as the kindling wood.

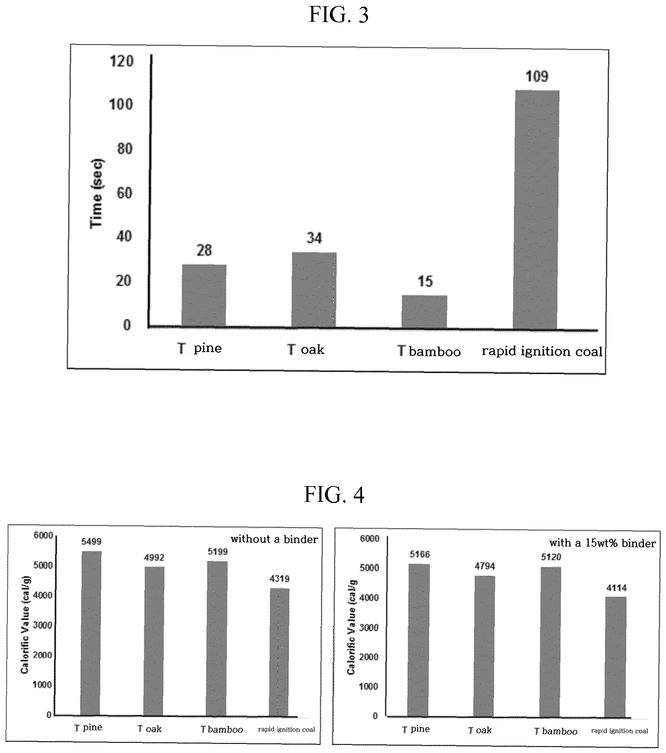

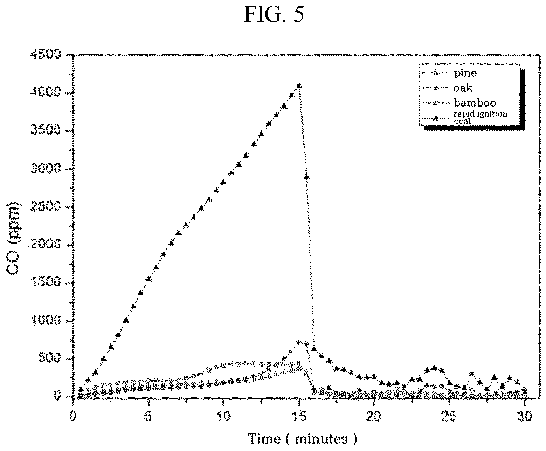

Meanwhile, FIG. 3 is a graph showing the results of the comparative analysis of the ignition time with the cone calorimeter experiment. In the case of the conventional rapid ignition coal, the ignition time was found to be required to be longer than those of the three types of the ignition coal according to the present invention. This was found to be considered to be due to the fact that the non-combustion materials including sodium nitrate are randomly stirred in the process of pulverizing the rapid ignition coal. Also, among the three types of the ignition coal according to the present invention, the ignition performance of bamboo could be confirmed to be superior to that of the general needle-leaf tree or broadleaf tree.
3) The calorific value which is an important factor for evaluating the fuel performance as the molding fuel of the raw material of the product according to the present invention was measured, and the results thereof are shown in FIG. 4, showing experimental graphs with or without a binder. As a result of the measurement, it was found that the condition of adding 15 wt% of a gelatin binder decreased the amount of heat in common. Therefore, it can be understood that the amount of heat of the rapid ignition coal being distributed on the market was relatively lower than those of the three types of the ignition coal according to the present invention. In addition, since the product of the present invention does not contain a component such as sodium nitrate, it can be inferred that there is no significant difference in the heat amount characteristics of the main material.
4) The following is the result of actual measurement of the amount of carbon monoxide generated after applying 15g of linseed oil on the outer surface of the ignition coal and igniting the ignition coal applied with the linseed oil, except for the cone calorimeter experiment being the above-mentioned miniaturized experiment. The size of the chamber used in this experiment was 100x100x200 cm and the measurement time was a total 30 minutes with the first 15 minutes without oxygen and the second 15 minutes with oxygen in which the situations were simulated as a use for the suicide (the former) and for the roasting (the latter) and the results are shown in FIG. 5.

As shown in FIG. 5, the carbon monoxide concentration of the product of the present invention was significantly lower than that of the conventional rapid ignition coal. In the conventional rapid ignition coal used in the present experiment, the maximum carbon monoxide concentration was 4096 ppm, but in the three types of the ignition coal according to the present invention, the maximum carbon monoxide concentrations were decreased by 87 % to 92 %, respectively. Therefore, the product of the present invention is distinguished as the most harmful toxic gas of the agglomerated wood charcoal, but it can be understood that the content of carbon monoxide, which is a cause of suicide use, is remarkably low.

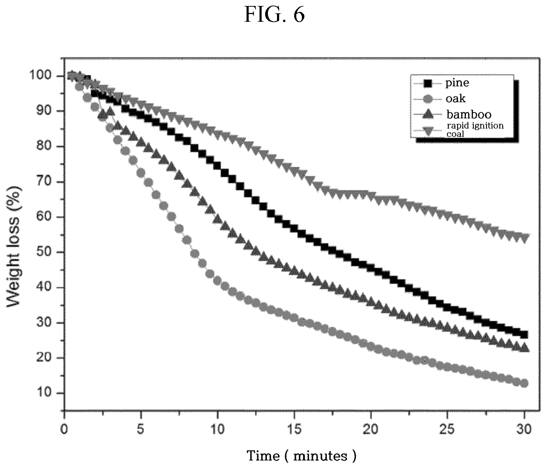

Meanwhile, FIG. 6 is a graph showing the weight reduction rate with respect to the combustion time. As shown in FIG. 6, the product of the present invention exhibits more reduction in an identical time than the conventional rapid ignition coal. The reason for this is that the fixed carbon ratio of the charcoal, which is the raw material of the conventional rapid ignition coal, is higher than the semi-carbonized woods, which are the raw material of the products of the present invention. However, as shown in FIG. 7 (in terms of the calorific value using the weight reduction value), the weight (g) decreasing per hour was converted into the value of the high calorific value, and the total calories were summed. As a result, the amounts of heat generated within an identical time of the products of the present invention were higher by 57 % to 60 % than that of the conventional rapid ignition coal. Therefore, when considering the use of the rapid ignition coal is used as a kindling wood, the ignition coal according to the present invention is superior to the conventional rapid ignition coal, in terms of thermal efficiency.

In addition, as one of the great advantages of the present invention, in most cases of the conventional rapid ignition coal, the charcoal soot may be applied to the hand during handling, but the cases where the coal soot is applied to the hand during handling are rarely encountered in the case of the ignition coal according to the present invention. The reason for this is that it is because charcoal is used in the case of the conventional rapid ignition coal, and it is often caused by the action of graphite, which is a high carbon material, to pollute hands or clothes during handling. In addition, it is determined that the strength of the conventional rapid ignition coal is also weaker than those of the three types of the ignition coal according to the present invention, to thus cause the conventional rapid ignition coal to be easily broken.

Accordingly, as described above, the environmentally friendly ignition coal according to the present invention is provided to be capable of significantly reducing the generation of noxious gas while rapidly igniting compared to the conventional ignition charcoal. Also, the environmentally friendly ignition coal according to the present invention is expected to be used as a substitute for the conventional ignition coal in relation to camping, where the market size is increasing recently.

Meanwhile, according to the Forest Service Announcement in the Republic of Korea (Forestry Statistical Yearbook, 2014), the number of trees suffering from damage from disease and harmful insects is increasing every year. Generally, it is very difficult to process these woody materials such as squared timbers or boards due to the problems of wood yield and strength defects of trees suffering from damage from disease and harmful insects caused by intrusion holes caused by dead plants or inhabitation of the larvae of insects. However, such harmful insect-damaging trees can be utilized as a ligneous material for the ignited coal of the present invention, and as a result, it is possible to reliably prevent damages such as second recurrence of infection caused by damage from disease and harmful insects through the high temperature treatment, and simultaneously to satisfy all the optimum conditions for producing the environmentally friendly ignition coal of the present invention, and the like.

While the present invention has been particularly shown and described with reference to exemplary embodiments thereof, it is to be understood that the invention is not limited to the disclosed exemplary embodiments, but, on the contrary, any person skilled in the art will be able to carry out various modifications and variations within the scope of the appended claims.

### INDUSTRIAL APPLICABILITY

The present invention can be used as an environmentally friendly ignition coal in which ignition is easy and toxic gas generation is remarkably reduced because no other igniting agents and chemical adhesives are used.

## Claims

1. A toxic gas reducing environmentally friendly ignition coal **characterized by** being produced by chipping a woody material by using an industrial chipper and then heat-treating at a treatment temperature of 150 °C to 400 °C so that the carbon content is 55 wt% or more and less than 80 wt%; pulverizing the woody material that has undergone the heat treating step into a pulverizer to then be pulverized into a wood powder; agitating the heat-treated wood powder with a natural adhesive selected from the group consisting of a starch adhesive, a rice flour adhesive, a gelatin adhesive, a slaughter blood plasma adhesive, an agar adhesive, and a tannin adhesive, to then inject the agitated wood powder into a mold or a mold press; compression molding and drying the molded wood powder; and applying 10 g to 30 g of drying oil on one side of the molded and dried ignition coal, thereby easing ignition and reducing toxic gas generation.

2. A method of producing a toxic gas reducing environmentally friendly ignition coal, the method comprising the steps of:
chipping a woody material by using an industrial chipper;
heat-treating the woody chips at a treatment temperature of 150 °C to 400 °C so that the carbon content is 55 wt% or more and less than 80 wt%;
pulverizing the woody material that has undergone the heat treating step into a pulverizer to then be pulverized into a wood powder;
agitating the heat-treated wood powder with a natural adhesive selected from the group consisting of a starch adhesive, a rice flour adhesive, a gelatin adhesive, a slaughter blood plasma adhesive, an agar adhesive, and a tannin adhesive, to then inject the agitated wood powder into a mold or a mold press;
compression molding and drying the molded wood powder; and
after having undergone a cooling process at the room temperature for 1 day to 2 days in the molding and drying step, applying 10 g to 30 g of drying oil on one side of the molded and dried ignition coal to then perform hot air drying in a dryer at 40 °C to 105 °C, thereby easing ignition and reducing toxic gas generation.

3. The method of claim 2, wherein, in the step of pulverizing the woody material into the wood powder, pulverization is performed in a size of 2.36 mm (8 mesh) to 0.425 mm (40 mesh).

4. The method of claim 2, wherein, in the heat treatment step, the atmospheric temperature of a furnace in a carbonization apparatus is raised to 150 °C to 400 °C, and the inside of the furnace is subjected to heat treatment for 72 hours or less in an oxygen-free condition, in which, in the carbonization apparatus, the wood chips are supplied into a rotary drum rotating around the horizontal axis of the carbonization apparatus, and the rotary drum is heated by a heating unit for a rapid heat treatment, while rotating the rotary drum by a motor.

## Patentansprüche

1. Toxische Gase reduzierende umweltfreundliche Zündkohle, **dadurch gekennzeichnet, dass** sie erzeugt wird, indem ein holziges Material unter Verwenden einer industriellen Hackmaschine gehackt wird und dann bei einer Behandlungstemperatur von 150 °C bis 400 °C wärmebehandelt wird, so dass der Carbongehalt 55 Gew. % oder mehr und weniger als 80 Gew. % beträgt; Mahlen des holzigen Materials, das dem Wärmebehandlungsschritt unterzogen wurde, in einer Mahlanlage, um dann in ein Holzpulver gemahlen zu werden; Mischen des wärmebehandelten Holzpulvers mit einem natürlichen Kleber, der aus der Gruppe ausgewählt ist, die aus einem Stärkekleber, einem Reismehlkleber, einem Gelatinekleber, einem Schlachtblutplasmakleber, einem Agarkleber und einem Tanninkleber besteht, um dann das gemischte Holzpulver in eine Form oder eine Formpresse zu injizieren; Druckformen und Trocknen des geformten Holzpulvers; und Auftragen von 10 g bis 30 g Trockenöl auf einer Seite der geformten und getrockneten Zündkohle, wodurch das Zünden erleichtert und das Erzeugen toxischer Gase reduziert wird.

2. Verfahren zum Erzeugen einer toxische Gase reduzierenden umweltfreundlichen Zündkohle, wobei das Verfahren die Schritte umfasst des:
Hackens eines holzigen Materials unter Verwenden einer industriellen Hackmaschine;
Wärmebehandeln der holzigen Späne bei einer Behandlungstemperatur von 150 °C bis 400 °C, so dass der Carbongehalt 55 Gew. % oder mehr und weniger als 80 Gew. % beträgt;
Mahlen des holzigen Materials, das dem Wärmebehandlungsschritt unterzogen wurde, in einer Mahlanlage, um dann in ein Holzpulver gemahlen zu werden;
Mischen des wärmebehandelten Holzpulvers mit einem natürlichen Kleber, der aus der Gruppe ausgewählt ist, die aus Stärkekleber, einem Reismehlkleber, einem Gelatinekleber, einem Schlachtblutplasmakleber, einem Agarkleber und einem Tanninkleber besteht, um dann das gemischte Holzpulver in eine Form oder eine Formpresse zu injizieren;
Kompressionsformen und Trocknen des geformten Holzpulvers; und nachdem es einem Abkühlprozess bei der Raumtemperatur während 1 Tag bis 2 Tage bei dem Form und Trocknungsschritt unterzogen wurde, Auftragen von 10 g bis 30 g Trockenöl auf einer Seite der geformten und getrockneten Zündkohle, um dann Heißlufttrocknen in einer Trockenanlage bei 40 °C bis 105 °C auszuführen, wodurch das Zünden erleichtert und das Erzeugen toxischer Gase reduziert wird.

3. Verfahren nach Anspruch 2, wobei bei dem Schritt des Mahlens des holzigen Materials in Holzpulver das Mahlen in eine Größe von 2,36 mm (8 Mesh) bis 0,425 mm (40 Mesh) ausgeführt wird.

4. Verfahren nach Anspruch 2, wobei bei dem Wärmebehandlungsschritt die atmosphärische Temperatur eines Ofens in einem Verkohlungsgerät auf 150 °C bis 400 °C angehoben wird, und das Innere des Ofens einer Wärmebehandlung während 72 Stunden oder weniger in einem sauerstofffreien Zustand unterzogen wird, wobei in dem Verkohlungsgerät die Holzspäne in eine Drehtrommel zugeführt werden, die um die horizontale Achse des Verkohlungsgeräts dreht, und die Drehtrommel durch eine Heizeinheit für eine schnelle Wärmebehandlung erhitzt wird, während die Drehtrommel von einem Motor gedreht wird.

## Revendications

1. Charbon d'allumage respectueux de l'environnement, réduisant les gaz toxiques, **caractérisé en ce qu'**il est produit par déchiquetage d'une matière ligneuse à l'aide d'une déchiqueteuse industrielle, puis traitement thermique à une température de traitement de 150°C à 400°C de sorte que la teneur en charbon est de 55% en poids ou plus et moins de 80% en poids ; pulvérisation de la matière ligneuse qui a subi l'étape de traitement thermique dans un pulvérisateur pour ensuite la transformer en une poudre de bois ; agitation de la poudre de bois traitée thermiquement avec un adhésif naturel choisi dans le groupe constitué par un adhésif à base d'amidon, un adhésif à base de farine de riz, un adhésif à base de gélatine, un adhésif à base de plasma sanguin d'abattage, un adhésif à base d'agar et un adhésif à base de tanin,
pour ensuite injecter la poudre de bois agitée dans un moule ou une presse de moulage ; moulage par compression et séchage de la poudre de bois moulée ; et application de 10 à 30 g d'huile siccative sur un côté du charbon d'allumage moulé et séché, facilitant ainsi l'allumage et réduisant l'émanation de gaz toxiques.

2. Procédé de production d'un charbon d'allumage respectueux de l'environnement, réduisant les gaz toxiques, ledit procédé comprenant les étapes de:
déchiquetage d'une matière ligneuse à l'aide d'une déchiqueteuse industrielle;
traitement thermique des copeaux ligneux à une température de traitement de 150°C à 400°C de sorte que la teneur en charbon est de 55% en poids ou plus et moins de 80% en poids;
pulvérisation de la matière ligneuse qui a subi l'étape de traitement thermique dans un pulvérisateur pour ensuite la transformer en une poudre de bois;
agitation de la poudre de bois traitée thermiquement avec un adhésif naturel choisi dans le groupe constitué par un adhésif à base d'amidon, un adhésif à base de farine de riz, un adhésif à base de gélatine, un adhésif à base de plasma sanguin d'abattage, un adhésif à base d'agar et un adhésif à base de tanin, pour ensuite injecter la poudre de bois agitée dans un moule ou une presse de moulage;
moulage par compression et séchage de la poudre de bois moulée;
et après un processus de refroidissement à la température ambiante pendant 1 à 2 jours dans l'étape de moulage et de séchage, application de 10 à 30 g d'huile siccative sur un côté du charbon d'allumage moulé et séché pour ensuite procéder à un séchage à l'air chaud dans un séchoir à 40°C à 105°C, facilitant ainsi l'allumage et réduisant l'émanation de gaz toxiques.

3. Procédé selon la revendication 2, dans lequel, dans l'étape de pulvérisation de la matière ligneuse en poudre de bois, la pulvérisation est effectuée dans une taille de 2,36 mm (8 mesh) à 0,425 mm (40 mesh).

4. Procédé selon la revendication 2, dans lequel, dans l'étape de traitement thermique, la température atmosphérique d'un four dans un appareil de carbonisation est portée à 150 à 400°C, et l'intérieur du four est soumis à un traitement thermique pendant 72 heures ou moins en l'absence d'oxygène, dans lequel, dans l'appareil de carbonisation, les copeaux de bois sont alimentés dans un tambour rotatif tournant autour de l'axe horizontal de l'appareil de carbonisation, et le tambour rotatif est chauffé par une unité de chauffage pour un traitement thermique rapide, tandis que la rotation du tambour rotatif est assurée par un moteur.
